**Europäisches Patentamt**

**European Patent Office**

**Office européen des brevets**

(11) Veröffentlichungsnummer: **0 255 477 B1**

# (12) EUROPÄISCHE PATENTSCHRIFT

(45) Veröffentlichungstag der Patentschrift:
**11.12.91 Patentblatt 91/50**

(51) Int. Cl.⁵: **B65G 1/04, B66F 9/07**

(21) Anmeldenummer: **87810397.7**

(22) Anmeldetag: **15.07.87**

(54) **Blechlager.**

(30) Priorität: **18.07.86 CH 2879/86**

(43) Veröffentlichungstag der Anmeldung:
**03.02.88 Patentblatt 88/05**

(45) Bekanntmachung des Hinweises auf die
Patenterteilung:
**11.12.91 Patentblatt 91/50**

(84) Benannte Vertragsstaaten:
**AT CH DE FR IT LI NL**

(56) Entgegenhaltungen:
**WO-A-85/01493**
**DE-B- 1 217 874**

(73) Patentinhaber: **Sieber, Hans**
**Alpsteinstrasse 4**
**CH-9524 Zuzwil (CH)**

(72) Erfinder: **Sieber, Hans**
**Alpsteinstrasse 4**
**CH-9524 Zuzwil (CH)**

(74) Vertreter: **Kulhavy, Sava, Dipl.-Ing.**
**Patentanwaltsbüro S.V. Kulhavy Postfach 450**
**Kornhausstrasse 3**
**CH-9001 St. Gallen (CH)**

## Beschreibung

Die vorliegende Erfindung betrifft ein Blechlager mit Regalen, in welchen Blechtafeln auf Trägern liegend gelagert sind, wobei diese Träger an Stützen angebraht sind und wobei die Träger zweier benachbarten Reihen von Stützen gegeneinander gerichtet sind, sodass zwischen den Trägern ein Gang vorhanden ist, und mit einem Bediengerät, welches entlang den Regalen bewegbar ist und welches ebenfalls mit Trägern für das Lagergut ausgerüstet ist, wobei die Blechtafeln direkt auf den in derselben Ebene angeordneten Trägern liegen und wobei der Abstand zwischen den Trägern so gewählt ist, dass die Blechtafeln gelagert und gehandhabt werden können, ohne dass sie eine nennenswerte Verbiegung aufweisen.

Ein Blechlager dieser Gattung ist in WO-A-85/01493 desselben Schutzrethtsinhabers offenbart. Das Bediengerät ist bei diesem vorbekannten Blechlager als ein unten fahrendes und Schienen gebundenes Gerät ausgeführt. Dies hat beispielsweise den Nachteil, dass der Boden des Lagers mit Schienen versehen sein muss, so dass es kaum möglich ist, dass ein andersartiges Fahrzeug sich im Gang des Lagers bewegen kann.

In DE-B-1217874 ist ein Lager offenbart, welches parallel zueinander verlaufende Reihen von kastenförmigen Lagergestellen umfasst. Zwischen solchen Lagergestellen ist ein verhältnismässig schmaler Gang vorhanden. Auf jener Randpartie des jeweiligen kastenförmigen Gestells, welche am Gang unmittelbar angrenzt, ist eine Schiene für ein oben fahrendes Bediengerät angeordnet. Zwischen den so nahe aneinander liegenden Schienen erstreckt sich der Wagen des Bediengerätes, welcher somit praktisch nur den Gang überspannt. Vom Wagen des Bediengerätes hängt ein Hubmast herab, an welchem ein Lastträger samt weiteren Teilen des Bediengerätes angebracht ist. Der Lastträger ist um den Hubmast herum drehbar, damit der Lastträger be- und entladen werden kann und damit der Lastträger die beiden Regale bedienen kann.

Als nachteilig gilt bei diesem Lager, dass die Höhe desselben recht begrenzt ist und dass es auch beträchtliche Begrenzungen beim Lagergut selbst gibt. Die Abmessungen des Lagerguts, welche in einer horizontalen Ebene liegen, dürfen nicht grösser sein als die Breite des Ganges. Auch gewichtsmässig gibt es Beschränkungen beim Lagergut, weil der oben aufgehängte Hubmast bei schwereren Lasten kippen würde, und zwar entweder in der Richtung des Ganges oder quer zu dieser Richtung oder in den beiden Richtungen. Dies hängt vom Verhältnis zwischen dem Gewicht des Lagerguts und den Abmessungen des Bediengerätes ab. Ein socthes Lager scheint für die Lagerung von Blechtafeln kaum verwendbar zu sein.

Die Aufgabe der vorliegenden Erfindung ist, ein Blechlager anzugeben, in welchem grossflächige und schwere Tafeln in einer rationellen Weise aufbewahrt werden können, wobei die Bodenfläche des Lagers praktisch frei bleiben soll.

Diese und noch weitere Aufgaben werden beim Blechlager der eingangs genannten Gattung erfindungsgemäss so gelöst, wie dies im kennzeichnenden Teil des Anspruchs 1 definiert ist.

Ein solches Lager ermöglicht unter anderem, dass das Bedienge-rät, auch wenn es ganz schwer belastet ist, nicht kippen bzw. sich nicht verkanten kann. Denn quer zur Längsrichtung des Ganges kann das Bediengerät deswegen nicht kippen, weil seine Brücke nicht nur den Gang selbst sondern auch die ganze Tiefe der beiden und zu den beiden Seiten des Ganges stehenden Gestelle überspannt. Die Laufräder des Bediengerätes laufen nämlich auf Schienen, welche sich an der äussersten bzw. zuhinterst liegenden und vom Gang entferntesten Stelle des jeweiligen Gestelles befindet. Die Schienen erfüllen jedoch zugleich auch noch eine zweite Aufgabe, nämlich, dass sie die oberen Enden der in Abständen voneinander aufgestellten L-förmigen Stützen untereinander verbinden. Dank der die Stützen überspannenden Schiene können dieselben nicht kippen und sie bilden zugleich auch ein starres Gefüge. Das Bediengerät kann auch in Richtung des Ganges nicht kippen, weil der Abstand zwischen den Hubmasten an der Brücke des Bediengerätes und somit auch die in dieser Richtung liegende Abmessung des Bediengerätes durch die Breite des Ganges in keiner Weise begrenzt ist.

Nachstehend werden Ausführungsbeispiele der vorliegenden Erfindung anhand der beiliegenden Zeichnungen näher erläutert. Es zeigt:

Fig. 1 in einer Draufsich das vorliegende Blechlager,

Fig. 2 in einer Frontansicht einen Endabschnitt einer der Regalenreihen des Blechlagers nach Fig. 1,

Fig. 3 in einer Seitenansicht eines der Regalengestelle und

Fig.4 in einer Seitensansicht des vorliegende Blechlager.

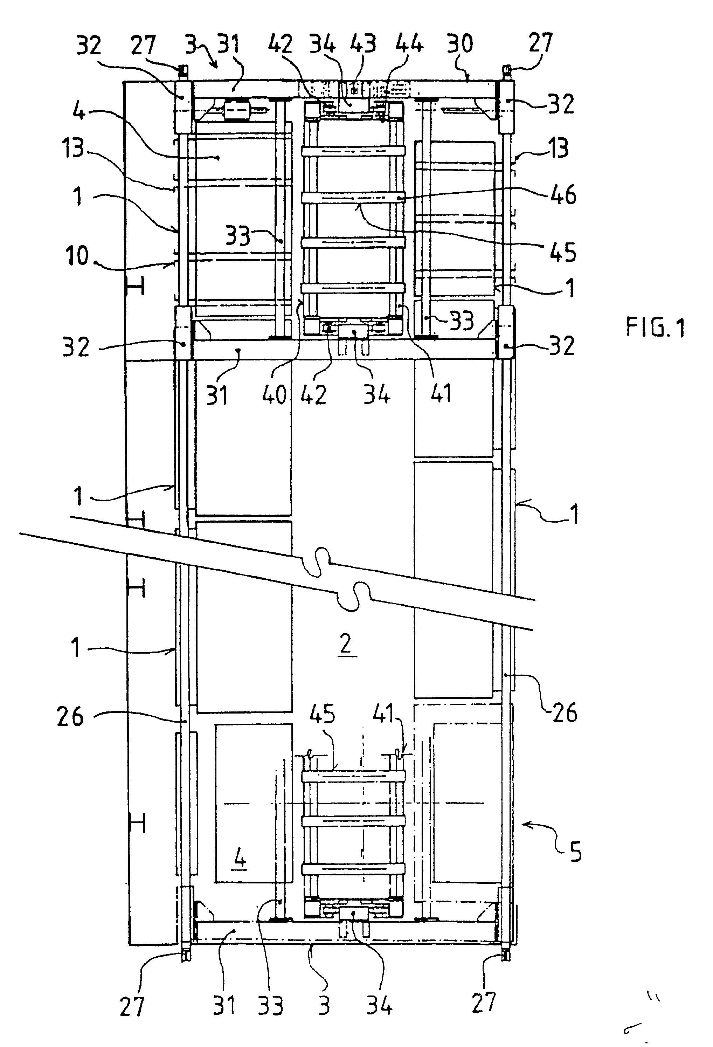

In Fig. 1 ist das Blechlager in Draufsicht dargestellt. Es weist Regale 1 auf, welche im in Fig. 1 dargestellten Beispiel zwei Reihen bilden. Zwischen diesen Regalenreihen ist ein Gang 2 vorhanden, in welchem sich ein Bediengerät 3 für die Regale 1 bewegen kann. In den Regalen 1 sind Blechtafeln 4 gelagert. Ueber den Regalen 1 und in der Richtung der Regalenreihen erstreckt sich eine Fuhrungsbahn 5 für das Bediengerät 3. In der in Fig. 1 rechts dargestellten Endpatie des Blechlagers ist das Bediengerat 3 anhand seiner wesentlichen Bestandteile dargestellt, während in der linken Randpartie von Fig. 1 nur einige dieser Bestandteile abgebildet sind, um auch die andere mögliche Endstellung des Bediengerates 3 anzudeuten.

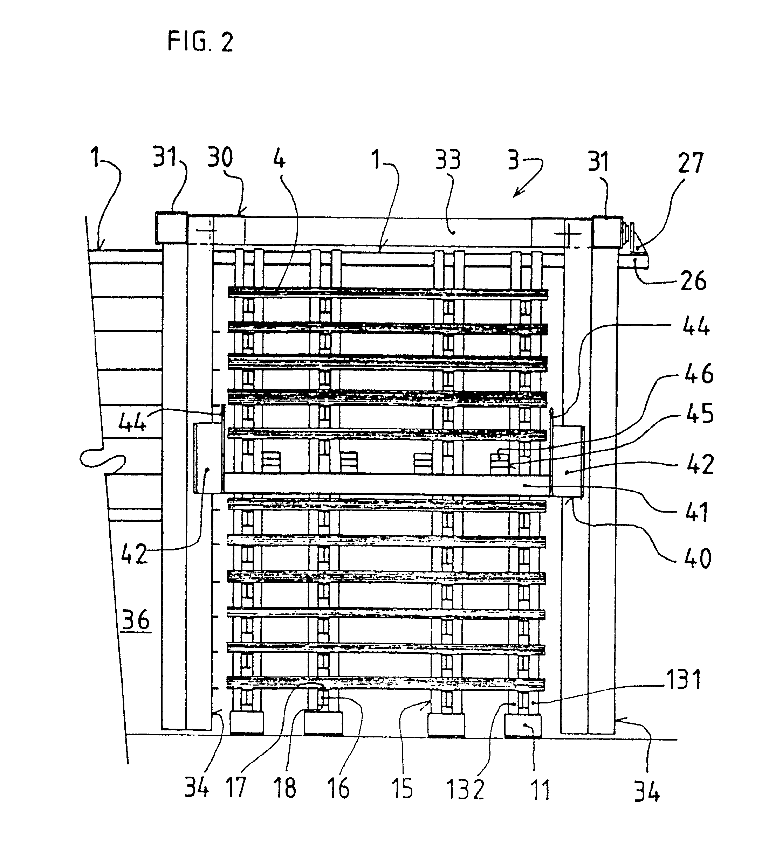

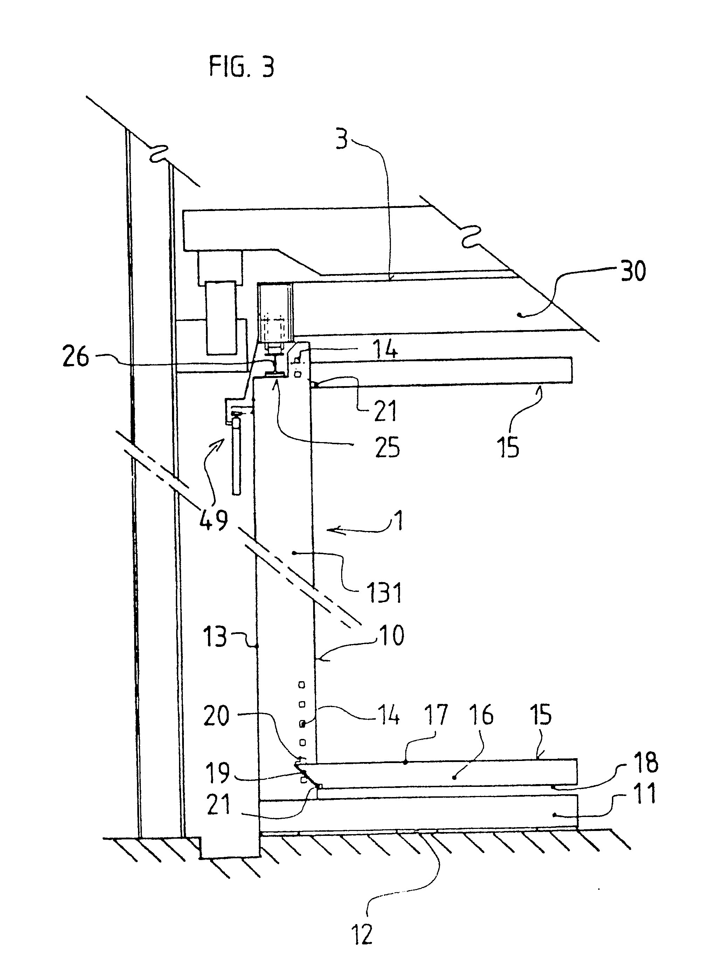

Fig. 2 zeigt den rechten Endabschnitt einer der Regalenreihen des Blechlagers nach Fig. 1 in Frontansicht. Hinter dem Bediengerat 3 sind übereinander liegende und zu Paketen geordnete Blechtafeln 4 ersichtlich. In Fig. 3 ist die Ausbildung der Regalengestelle naher gezeigt.

Die Regale 1 enthalten L-formige Stutzen 10, bei welchen ihr horizontaler Schenkel 11 über Fussplatten 12 auf dem Boden des Blechlagers ruht. Dieser horizontale Schenkel 11 ist aus einem Materialstuck, das am meisten Steifigkeit bietet. Im dargestellten Beispiel handelt es sich um Profilstahl mit viereckigem Querschnitt. Der vertikale Schenkel 13 der L-förmigen Stutze 10 weist zwei sich in einem Abstand voneinander befindliche Leisten 131 und 132 (Fig .2) auf, wobei die unteren Enden dieser Leisten 131 und 132 mit dem hinteren Ende des horizontalen Schenkels 11 verbunden sind. In Fig. 3, die einen vertikalen Längsschnitt durch eine der L-förmigen Stutzen 10 unter anderem zeigt, ist nur die hintere Leiste 131 ersichtlicht. Die Leisten 131 und 132 können aus Profilstucken mit U-förmigen Querschnitt sein, wobei die Stege bzw. Boden dieser Profilstucke einander zugewandt sind. Zwischen den Leisten 131 und 132 der jeweiligen L-förmigen Stutze 10 erstrecken sich Sprossen 14 deren Enden in den Leisten 131 und 132 befestigt sind.

An eine L-förmige Stütze 10 sind Kragarme 15 angeschlossen, welche als Träger für die im Regal 1 abgelagerten blechtafeln 4 dienen. Der jeweilige Kragarm 15 ist aus Profilstahl von I-förmigem Querschnitt, wobei der Querschnitt dieses Kragarmes 15 in Fig. 2 dargestellt ist. Der verbindungssteg 16 zwischen den Schenkeln 17 und 18 dieses I-Profils verlaüft vertikal.

Die sich an den vertikalen Schenkel 13 der Stütze 10 anschliessende Endpartie des Kragarmes 15 weist im Bereich des unteren I-Schenkels 18 eine Anschrägung 19 auf, so dass dieses Kragarmende im Bereich des oberen I-Schenkels 17 mit einer Verjüngung versehen ist. Die Hohe dieser Verjüngung 19 etwa in der Mitte der Länge derselben entspricht dem Abstand zwischen zwei ubereinander liegenden Sprossen 14 in der Stütze 10. Auf der Oberseite des oberen Schenkels 17 befindet sich am Ende dieses ein Anschlag 20, der sich hinter der darüber liegenden Sprosse 14 verhaken kann. Die Lange dieses Anschlages 20 ist kleiner als der Abstand zwischen den zwei Leisten 131 und 132 der Stütze 10, sodass dieses Kragarmende zwischen den Leisten 131 und 132 und zwischen zwei Sprossen 14 in der gewünschten Hohe eines Regalfaches durchgesteckt werden kann.

Am Ende des unteren I-Schenkels 18 befinded sich ein Auflagestück 21, aus Vierkantprofil sein kann. Die Lange dieses Auflagestückes 21 ist grösser als der Abstand zwischen den Leisten 131 und 132, sodass dieses Auflagestuck 21 zwischen den gennanten Leisten nicht durchgeführt werden kann. Beim bereits erwähnten Durchstecken der spitzigen Endpartie 19 des Kragarmes 15 durch den vertikalen Schenkal 13 der Stutze 10 kommt das Auflagestuck 21 zum Aufliegen auf der Vorderseite der Stütze 10. Der Kragarm 15 ist seitlich durch die Leisten 131 und 132 der Stutze 10 geführt und in der vertikalen Richtung ist er oben mit einer der Sprossen 14 formschlüssig verbunden, während er unten durch das Auflagestück 21 abgestutzt ist. So ist die praktisch horizontale Lage des Kragarmen 15 sichergestellt. Diese Konstruktion der Stütze 10 erlaubt, ausserordentlich grosse Lasten aufzunemen. Zudem ist diese Konstruktion der Stütze 10 sehr einfach und sie ermöglicht ausserdem eine sehr einfache Aenderung der Hohe der Kragarme 15, Ohne dabei Werkzeuge benützen zu müssen.

Der obere Endabscnnitt der vertikalen schenkel 13 der Stützen 10 weist einen rechtwinkligen Ausschnitt 25 auf. Auf dem horizontal verlaufenden Abschnitt dieses Ausschnittes 25 ruht eine der Schienen 26 der Führungsbahn 5 für das Bediengerat 3, wobei diese Endpartie der Stütze 10 mit der jeweiligen Schiene 26 in einer geeigneten und an sich bekannten Weise verbunden ist. Die Schienen 26 dienen somit nicht nur zur Führung des Bediengerätes 3 sondern auch als Binder tür die oberen Endpartien der Stützen 10. Aus Fig. 2 ist ersichtlich, dass am Ende der Schienen 26 sich Prallböcke 27 befinden, welche die Bewegungsbahn des Bediengerätes 3 begrenzen.

Da die Stützen 10 sehr einfach gestaltet sind und da sie sich an beliebiger Stelle des jeweiligen Regals 1 aufstellen lassen, wobei die Verbindung zwischen der Stütze 10 und der Schiene 26 sehr einfach durchgeführt werden kann, ist es im vorliegenden Fall möglich, in einem Regal 1, auch nachträglich, so viele Stützen 10 dieser Art aufzustellen, dass man bei der Lagerung von Blechtafeln auf paletten oder dgl. verzichten kann. Denn bei einer ausreichenden Anzahl der die Blechtafeln 4 tragenden Kragarme 15 kommt keine nennenswerte Verbiegung der im jeweiligen Fach direkt gelagerten Blechtafeln vor. Die Blechtafeln 4 können somit in den Fachern der Regale 1 gelagert werden, ohne paletten oder dergleichen benützen zu müssen.

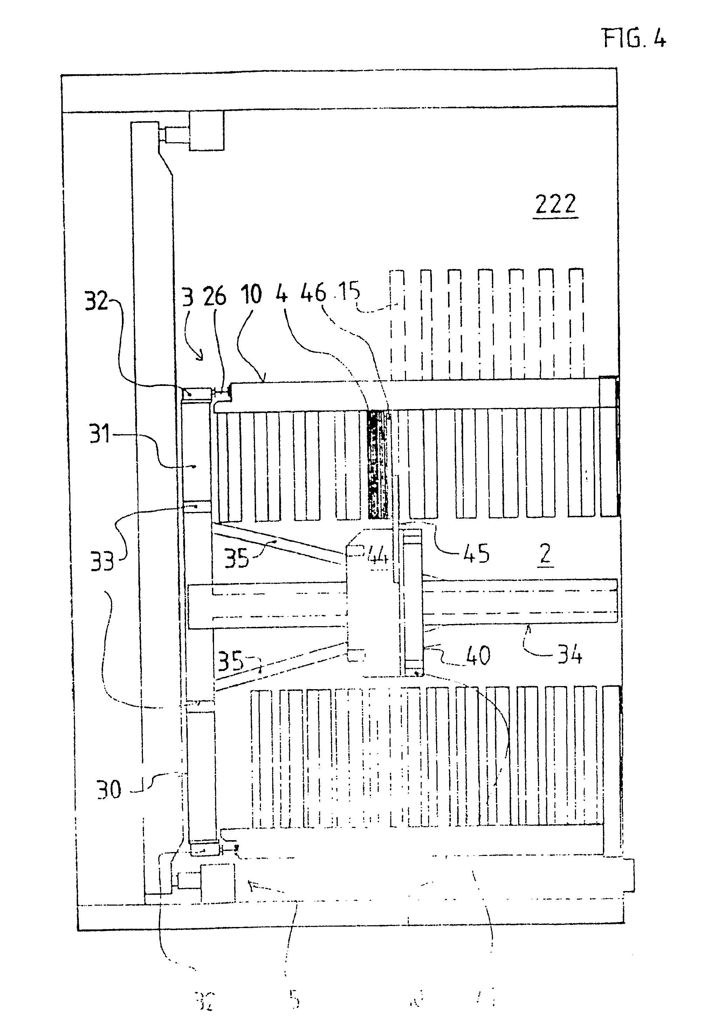

Das Bediengerät 3 ist als ein Regalstapelgerät ausgeführt, das über die bereits genannten Schienen 26 auf den Regalen 1 abgestützt ist. Dieses Gerat 3 enthält eine Brücke 30, die zwei Längsträger 31 (Fig. 1) aufweist. Am Ende dieser Längstrager 31 befinden sich Räder 32, die auf den Schienen 26 abrollen können und die durch elektrische Motoren antreibbar sind. Die Längstrager 31 sind mittels Querträger 33 miteinander verbunden, die sich in einem Abstand von den Enden der Langstrager 31 befinden. Etwa in der Mitte des jeweiligen Langstragers 31 hängt ein Mast 34 herab, der sich bis in die Nähe des Lagerbodens erstreckt. Der Mast 34 ist mit Hilfe von Streben 35 (fig. 4) versteift, welche sich zwischen der Brücke 30 und zu den beiden Seiten des jeweiligen Mastes 34 schräg erstrecken.

Weil das Bediengerät 3 nur oben auf den Regalen 1 geführt ist, ist der Moden des Blechlagers frei von Schienen oder sonstigen Fuhrungsmitteln für das Bediengerät 3. In den Regalenreihen können Schleusen 36 (Fig. 2) durch Auslassung von Regelenabschnitten im Bodenbereich des Lagers gebildet werden, durch welche Transportwagen quer zur Bewegungsrichtung des Bediengerätes 3 ungehindert fahren können. Solche Schleusen 36 sind besonders dann sinnvoll, wenn die Regalenreihen lang sind.

Das Bediengerät 3 weist ferner eine Plattform 40 auf, welche entlang den Masten 34 vertikal bewegbar ist und welche zur Bedienung der Regalfäcber ausgeführt ist. Diese Plattform 40 enhält einen horizontal liegenden Rahmen 41, wobei die dem jeweiligen Mast 34 zugewandte Seite dieses Rahmens 41 mit Rollensätzen 42 versehen ist, mittels welcher die Plattform 40 entlang dem jeweiligen Mast 34 geführt wird. Die vertikal gerichtete Bewegung der Plattform 40 wird durch einen hydraulischen Zylinder 43 in an sich bekannter Weise erreicht, an den Seile angeschlossen sind, die andernends an der Plattform 40 angreifen. Damit der Bewegungsmechanismus der Plattform 40 gegen allfallige Verschiebung der sich in der Plattform 40 befindlichen Blechtafeln 4 geschutzt ist, ist jedem Satz 42 der Führungsrollen ein Schild 44 vorgeschaltet, der mit dem Rahmen 41 verbunden ist.

Zur Bedienung dem jeweiligen Regalfaches ist der Plattformrahmen 41 mit teleskopischen Trägern 45 versehen, die zu den belden Seiten dieses Rahmens 41 in das Innere der Regale 1 wahlweise ausfahrbar sind. Wie aus Fig. 2 ersichtlich ist, können solche Träger 45 drei aufeinander liegende und zur Ausführung einer teleskopischen Bewegung in einer an mich bekannten Weise miteinander verbundene Zinken 46 enthalten. Der oberste Zinke 46 legt dabei den langsten Weg zurück, wenn dieser Träger 45 in eines der Regalfächer eingreift. Fig. 4 zeigt einen vertikalen Schnitt durch die Anlage gemäss Fig. 1, der durch die Plattform 40 hindurchgeht. In Fig. 4 Ist einer der Träger 45 in ausgefahrenem Zustand dargestellt, bei dem die Zinken 46 dieses Trägers 45 rechts unter einem der Blechpakete 4 ausgefahren sind. Dieser Paket 4 ruht vorläufig noch auf den Kragarmen 15.

Die Zinken 46 der Plattformträger 45 sind durch elektrische einzelantriebe in an sich bekannter Weise angetrieben. Diese Antriebe sind beim vorliegenden Lager jedoch so ausgelegt, dass auch nur jene Zinken 46 ausgefahren werden können, welche innerhalb der Breite der zu handhabenden Blechtafel 4 liegen.

Bei einem solchen Blechlager ist es zweckmässig, den Abstand zwischen dem Rahmen 41 der Plattform 40 und den freien endpartien der Kragarme 15 so klein wie möglich zu halten, damit der Weg der ausgefabrenen Zinken möglichst kurz bleibt. Infolge dessen wird auch die Breite des Ganges 2 as klein wie möglich gehalten, woraus sich eine gute Ausnützung der zur Verfügung stehenden Bodenflache des Blechlagers ergibt.

Aus Fig. 4 ist auch ersichtlich, dass die Kragarme 15, wenn gewünscht, zu den beiden Seiten der Regalenstützen 10 angeordnet sein können. Hierzu kann noch eine zweite Reibe von Sprossen 14 (nicht dargestellt) im vertikalen Schenkel 13 der jeweiligen stütze 10 ausgeführt sein, die sich In der nähe der gegenüberliegenden Kante des Stützenschenkels 13 befindet. Diese Ausführung der Stütze 10 bietet den Vorteil, dass an der Stütze 10 Kragarme 15 zu den beiden Seiten der stutze 10 angebracht werden konnen, ohne dass der eine Satz derselben den Kragarmen 15 des anderen Satzes im Wege steht. Man könnte auch mit nur einer Reihe der sprossen 14 in einer Stütze 10 auskommen, die sich etwa in der Mitte der Breite des schenkels 13 befindet. Dann könnten die Kragarme 15 zu der einen Seite des stutzenschenkels 13 allerdings nur zwischen den Kragarmen 15 an der anderen seite der stütze 10 liegen. Bei einem solchen Blechlager kann das Bediengerät 3 mit Hilfe eines umsetzwagens (nicht dargestellt) in einen zweiten Gang 222 versetzt werden, von dem aus das Gerät 3 die soeben besprochene weitere Reihe von Regalfächern bedienen kann.

Die Speisung des Bediengerätes 3 mit elektrischer Energie erfolgt über eine Kabelvorrichtung 49, die an der Rückseite der Regale 1 angebracbt ist.

## Patentansprüche

1. Blechlager mit Regalen, in welchen Blechtafeln au auf ersten Trägern (15) liegend gelagert sind, wobei diese ersten Träger an Stützen (10) angebracht sind und wobei die ersten Träger zweier benachbarten Reihen von Stützen (10) gegeneinander gerichtet sind, sodass zwischen den Trägern ein Gang (2) vorhanden ist, und mit einem Bediengerät (3), welches entlang den Regalen bewegbar ist und welches ebenfalls mit zweiten Trägern (45) für das Lagergut ausgerüstet ist, wobei die Blechtafeln (4) direkt auf den in derselben Ebene angeordnete ersten und zweiten Trägern (15,45) liegen und wobei der Abstand zwischen den Trägern so gewählt ist, dass die Blechtafeln (4) gelagert und gehandhabt werden können, ohne dass sie eine nennenswerte Verbiegung aufweisen, dadurch gekennzeichnet, dass je eine Führüngsbahn (5) den oberen Enden der vertikalen Stützen (13) des jeweiligen Regals zugeordnet ist, dass die oberen Enden der vertikalen Stützen (13) mit der zugeordneten Führungsbahn (5) fest verbunden sind, dass das Bediengerät (3) eine Brücke (30) aufweist, welche den Abstand zwischen zwei benachbarten Führungsbahnen (5) überspannt, dass Laufräder (32), welche an den Enden der Brücke (30) angebracht sind, auf den Führungsbahnen (5) abrollen, dass das Bediengerät (3) ferner Maste (34) aufweist, welche sich in einem Abstand voneinander befinden, welche von der Brücke (30) herabhängen und welche sich bis in die Nähe des Lagerbodens erstrecken, dass zwischen den Masten (30) eine Plattform (40) angeordnet ist, dass diese Plattform (40) entlang den Masten (30) bewegbar ist, dass sie mit den zweiten Trägern (45) ausgerüstet ist und dass sie zum Austausch von Lagergut zwischen dem Bediengerät (3) und den Regalen (1) ausgebildet ist.

2. Blechlager nach Anspruch 1, dadurch gekennzeichnet, dass die jewilige Führungsbahn (5) eine Schiene (26) aufweist und dass diese Schiene (26) mit den oberen Enden der vertikalen Schenkel (13) der Stützen (10) des betreffenden Regals verbunden ist.

3. Blechlager nach Anspruch 1, dadurch gekennzeichnet, dass die Brücke (30) Längsträger (31) aufweist, welche den Abstand zwischen zwei benachbarten Führungsbahnen (5) überspannt, dass an den Endpärtien des jeweiligen Längsträgers sich die Laufräder (32) befinden, dass etwa in der Mitte der Länge des jeweiligen Längsträgers (31) die obere Endpartie eines der Maste (34) angeschlossen ist, und dass die Plattform (40) entlang den Masten (34) vertikal bewegbar ist.

4. Blechlager nach Anspruch 1, dadurch gekennzeichnet, dass der Mast (34) mit Hilfe von Streben (35) versteift ist und dass diese Streben sich zwischen der Brücke (30) und der jeweilgen Seite des Mastes (34) schräg erstrecken.

5. Blechlager nach Anspruch 1, dadurch gekennzeichnet, dass die Plattform (40) mit teleskopisch ausfahrbaren Trägern (45) ausgerüstet ist, welche zur Bedienung der Regalfächer bestimmt sind und welche zum Eindringen in den Raum zwischen den Trägern (15) des jeweiligen Regalfaches ausgebildet sind, dass die Träger (45) am Bediengerät zu den beiden Seiten der Plattform (40) ausfahrbar sind, dass die Träger (45) aufeinander liegende zinken (46) aufweisen können, wobei der Antrieb der ausfahrbaren, zweiten Träger (45) an der Plattform (40) derart ausgeführt sein kann, dass die Zinken nur bei denjenigen zweiten Trägern (45) ausgefahren werden können, welche innerhalb der Breite der jeweils zu versetzenden Blechtafel (4) liegen.

6. Blechlager nach Anspruch 1, dadurch gekennzeichnet, dass die Plattform (40) einen horizontal liegenden Rahmen (41) enthält, dass die dem jeweiligen Mast (34) zugewandte Seite dieses Rahmens mit Rollensätzen (42) und mit einem vorteilhaft hydraulischen Antrieb (43) versehen ist und dass ein Schild (44) dem jeweiligen Bewegungsmechanismus (42,43) zugeordnet sein kann.

7. Blechlager nach Anspruch 2, dadurch gekennzeichnet, dass die Stützen (10) einzeln aufstellbare Stützen sind, dass der obere Endabschnitt des vertikalen Schenkels (13) der Stütze (10) einen Ausschnitt (25) aufweist, welcher vorteilhaft rechtwinklig ist, dass in diesem Aüsschnitt (25) eine der Schienen (26) ruht, dass die Schiene (26) mit dieser Endpartie der Stütze (10), vorteilhaft mit dem horizontal verlaufenden Abschnitt des Ausschnittes (25) in der Stütze (10), verbunden ist und dass an den Enden der Schiene (26) sich Prellböcke (27) befinden können.

8. Blechlager nach Anspruch 1, dadurch gekennzeichnet, dass der horizontale Schenkel (11) der Stütze (10) aus einem länglichen und steifen Materialstück ist, dass der vertikale Schenkel (13) der Stütze (10) zwei sich in einem Abstand voneinander befindliche Leisten (131,132) aufweist, dass die unteren Enden dieser Leisten an den horizontalen Schenkel (11) angeschlossen sind, dass die Leisten (131 bzw. 132) aus Profilstücken mit U-förmigem Querschnitt sind, wobei die Stege bzw. Boden dieser Profilstücke einander zugewandt sind, dass zwischen den Leisten (131,132) der Stütze (10) sich Sprossen (14) zur Abstützung der ersten Träger (15) erstrecken, und dass die Enden der Sprossen in den Leisten befestigt sind.

9. Blechlager nach Anspruch 8, dadurch gekennzeichnet, dass die Sprossen (14) sich in der Mitte der Breite des vertikalen Schenkels (13) der Stütze (10) befinden oder dass die Stütze (10) zweinebeneinander und in der Längsrichtung des Vertikalschenkels (13) verlaufende Reihen von Sprossen (14) aufweist und dass die jeweilige Sprossenreihe sich in der Nähe einer der gegenüberliegenden Kanten des vertikalen Schenkels (13) der Stütze (10) befindet.

10. Blechlager nach Anspruch 8, dadurch gekennzeichnet, dass der an den vertikalen Schenkel (13) der Stütze (10) anschliessbare erste räger (15) eine spitzige Endpartie (19) aufweist und dass diese Endpartie (19) so ausgebildet ist, dass sie sich hinter einer der Sprossen (14) verhaken kann, während sie auf der darunter liegenden Sprosse (14) aufliegt.

11. Blechlager nach Anspruch 1, bei dem es zumindest zwei Gänge zwischen den Regalen gibt, dadurch gekennzeichnet, dass ein Umsetzwagen dem Bediengerät (3) zugeordnet ist, welches derart ausgeführt ist, dass er das Bediengerät von einem Gang in einen anderen Gang umsetzen kann.

12. Blechlager nach Anspruch 1, dadurch gekennzeichnet, dass Schleusen (36) in den Regalenreihen ausgeführt sind, durch welche Transportwagen für das Lagergut quer zur Bewegungsrichtung des Bediengerätes (3) fahren können.

13. Blechlager nach Anspruch 7, dadurch gekennzeichnet, dass der horizontale Schenkel (11) der Stütze (10) aus Profilstahl mit viereckigem Querschnitt ist und dass der Unterseite dieses Schenkels (11) eine Fussplatte (12) zugeordnet sein kann.

14. Blechlager nach Anspruch 3, dadurch gekennzeichnet, dass die Längsträger (31) mittels Querträger (33) miteinander verbunden sind, welche sich in einem Abstand von den Enden der Längsträger (31) befinden.

15. Blechlager nach Anspruch 1, dadurch gekennzeichnet, dass eine Kabelvorrichtung (49) vorgesehen ist, welche die Speisung des Bediengerätes (3) mit elektrischer Energie ermöglicht.

## Claims

1. Sheet metal store with shelves, where metal panels are stored flat on a first set of carriers (15), wherein this first set of carriers is attached to supports (10) and wherein the first set of carriers is directed towards two adjacent rows of supports (10) so that there is an aisle (2) between the carriers, with an operating unit (3) which can move along the shelves and which is also fitted with a second set of carriers (45) for the store material, wherein the metal panels (4) lie directly on the first and second sets of carriers ( 15, 45) which are arranged at the same level, and wherein the distance between the carriers is such that the metal panels (4) can be stored and handled without bending, wherein a guideway is assigned to the upper ends of the vertical supports (13) of the respective shelf and wherein the upper ends of the vertical supports (13) are secured to the assigned guideway (5) and wherein the operating unit (3) has a bridge (30) which spans the space between the two adjacent guideways (5) and wherein the runners (32) which are attached to the ends of the bridge (30) run on the guideways (5) and wherein the operating unit (3) has masts (34) located a distance from each other which hang down from the bridge (30) and which almost reach the base of the store and wherein a platform (40) is arranged between the masts (30) and wherein this platform (40) can be moved along the masts (30) and is fitted with the second set of carriers (45) and is designed to transfer the store material to and from the operating unit (3) and the shelves (1).

2. Sheet metal store according to Claim 1, wherein the respective guideway (5) has a rail (26) and wherein this rail (26) is connected to the upper ends of the vertical member ( 13) of the supports ( 10) of the relevant shelf.

3. Sheet metal store according to Claim 1, wherein the bridge (30), which spans the distance between two adjacent guideways (5), has longitudinal members (31 ), wherein the runners (31) are located at the end of the respective longitudinal member, wherein the upper section of one of the masts (34) is connected to the middle of the length of the respective longitudinal member (31) and wherein the platform (40) can be moved vertically along the mast (34).

4. Sheet metal store according to Claim 1, wherein the mast (34) is braced with the help of struts (35) and wherein these struts stretch diagonally between the bridge (30) and the respective side of the mast (34).

5. Sheet metal store according to Claim 1, wherein the platform (40) is fitted with telescopic carriers (45), which are designed to access the shelf compartments and penetrate the space between the carriers ( 15) of the respective shelf compartment, and wherein the carriers (45) on the operator device can extend to both sides of the platform (40) and wherein the carriers (45) can have prongs (46) lying one above the other and wherein the mechanism of the extendable second carriers (45) on the platform (40) can be arranged in such a way that the prongs can be extended only on the second carriers (45) which lie within the width of the metal panel (4) to be transferred.

6. Sheet metal store according to Claim 1, wherein the platform (40) contains a horizontal frame (41 ) and wherein the side of the frame (41 ) facing the respective mast (34) has sets of roller (42) and an advantageously hydraulic mechanism and wherein a plate can be assigned to the respective movement mechanism (42, 43).

7. Sheet metal store according to Claim 2, wherein the supports (10) can be individually erected, wherein the upper end section of the vertical member (13) of the support (10) has a notch (25) which is advantageously right-angled, wherein one of the rails (26) rests in this notch (25), wherein the rail with this end section of the support (10) is advantageously connected to the section of the notch (25) which runs horizontally and wherein buffers (27) can be located at the ends of the rails (26).

8. Sheet metal store according to Claim 1, wherein the horizontal member (11) of the support (10) is made of a long and stiff piece of material, wherein the vertical member (13) of the support (10) has two bars (131, 132) a distance apart from each other, and wherein the lower ends of these bars are fixed to the horizontal members (11) and wherein the bars (131 and 132 respectively) are channelled profile sections, wherein the bridges or bases respectively of these profile sections face each other, wherein runs to support the first set of carriers ( 15) stretch between the bars ( 131, 132) of the supports ( 10) and wherein the ends of the pegs are secured in the bars.

9. Sheet metal store according to Claim 8, wherein the rungs (14) are located in the middle of the width of the vertical member (13) of the support (10) or wherein the support (10) has two rows of pegs running next to each other and in the longitudinal direction of the vertical member. (13) and wherein the respective row of pegs is located near to one of the opposite edges of the vertical member. (13) of the support (10).

10. Sheet metal store according to Claim 8, wherein the first carrier (15) which can be connected to the vertical member. (13) of the support (10) has a pointed end section ( 19) and wherein this end section ( 19) is formed in such a way that it can hook behind one of the rungs (14), while it lies on the rung below (14).

11. Sheet metal store according to Claim 1, where there are at least two aisles between the shelves, wherein a transfer car is assigned to the operating unit (3), which is designed to transfer the operating unit from one aisle to another.

12. Sheet metal store according to Claim 1, wherein there are transfer canals (36) in the rows of shelves via which the transport cars for the store material can move at right angles to the direction in which the operating unit (3) moves.

13. Sheet metal store according to Claim 7, wherein the horizontal member (11) of the support ( 10) is made of sectional steel with a quadrilateral profile and wherein a footplate (12) can be assigned to the underside of this member (11).

14. Sheet metal store according to Claim 3, wherein the longitudinal members (31) are joined together by means of cross pieces (33), which are located at a distance from the ends of the longitudinal members (31 ).

15. Sheet metal store according to Claim 1, wherein there is a cable device (49), which makes it possible to supply the operating unit (3) with electrical energy.

## Revendications

1. Dispositif de stockage de tôles avec rayonnages dans lesquels des plaques de tôle sont posées à plat sur des premiers supports (15), ces premiers supports étant appliqués sur des montants (10) et les premiers supports de deux rangées voisines de montants (10) étant orientés en sens contraire, ce qui fait qu'entre les supports se trouve une allée (2), et comportant un dispositif de commande (3) qui se déplace le long des rayonnages et qui est équipé également de deuxièmes supports (45) pour le produit à stocker, les plaques de tôle (4) reposant directement sur les premiers et deuxièmes supports (15, 45) placés dans le même plan et l'écartement entre les supports étant choisi de telle sorte que les plaques de tôle (4) puissent être posées et manipulées sans qu'elles présentent une flexion notable, caractérisé en ce qu'une voie de guidage (5) est associée à chacune des extrémités supérieures des montants verticaux (13) du rayonnage respectif, en ce que les extrémités supérieures des montants verticaux (13) sont solidaires de la voie de guidage (5) associée, en ce que le dispositif de commande (3) comporte un pont (30) qui enjambe la distance séparant deux voies de guidage (5) voisines, en ce que des roues (32) qui sont placées aux extrémités du pont (30), roulent sur les voies de guidage (5), en ce que le dispositif de commande (3) comporte en outre des poteaux (34) qui sont écartés les uns des autres, qui pendent du pont (30) et qui s'étendent jusqu'à proximité du fond du dispositif de stockage, en ce qu'entre les poteaux (30) est placée une plate-forme (40), en ce que cette plate-forme (40) est déplaçable le long des poteaux (30), en ce qu'elle est équipée avec les deuxièmes supports (45) et en ce qu'elle est conçue pour l'échange de produits à stocker entre le dispositif de commande (3) et les rayonnages (1).

2. Dispositif de stockage de tôles selon la revendication 1, caractérisé en ce que la voie de guidage (5) respective comporte un rail (26) et en ce que ce rail (26) est relié aux extrémités superieures des branches verticales (13) des montants (10) du rayonnage concerné.

3. Dispositif de stockage de tôles selon la revendication 1, caractérisé en ce que le pont (30) comporte des longerons (31) qui enjambent la distance entre deux voies de guidage (5) voisines, en ce que les roues (32) se trouvent aux parties terminales du longeron respectif, en ce que la partie terminale supérieure de l'un des poteaux (34) est raccordée à peu près au milieu de la longueur du longeron (31) respectif et en ce que la plate-forme (40) est déplaçable verticalement le long des poteaux (34).

4. Dispositif de stockage de tôles selon la revendication 1, caractérisé en ce que le poteau (34) est renforcé l'aide d'entretoises (35) et en ce que ces entretoises s'étendent obliquement entre le pont (30) et le côté respectif du poteau (34).

5. Dispositif de stockage de tôles selon la revendication 1, caractérisé en ce que la plate-forme (40) est équipée de supports (45) pouvant être extraits télescopiquement, qui sont destinés à la commande des compartiments de rayonnage et qui sont conçus pour pénétrer dans l'espace compris entre les supports (15) du compartiment de rayonnage respectif, en ce que les supports (45) du dispositif de commande peuvent être extraits des deux côtés de la plate-forme (40), en ce que les supports (45) peuvent présenter des dents (46) superposées, l'entraînement des deuxièmes supports (45) pouvant être extraits de la plate-forme (40) étant réalisé de manière que les dents ne puissent être extraites que pour les deuxièmes supports (45) qui se situent à l'intérieure de la largeur de la plaque de tôle (4) à déplacer.

6. Dispositif de stockage de tôles selon la revendication 1, caractérisé en ce que la plate-forme (40) oontient un cadre (41) horizontal, en ce que le côté de ce cadre, tourné vers le poteau (34) respectif, est pourvu d'ensembles de rouleaux (42) et d'un mécanisme d'entraînement (43) avantageusement hydraulique, et en ce qu'un bouclier (44) peut être associé au mécanisme de déplacement (42, 43) respectif.

7. Dispositif de stockage de tôles selon la revendication 2, caractérisé en ce que les montants (10) sont des montants à placer individuellement, en ce que la partie terminale supérieure de la branche verticale (13) du montant (10) présente une découpe (25) qui est avantageusement à angle droit, en ce que dans cette découpe (25) repose l'une des rails (26), en ce que le rail respectif (26) est relié à cette partie terminale du montant (10), avantageusement avec la partie s'étendant horizontalement de la découpe (25) pratiquée dans le montant (10) et en ce qu'aux extrémités du rail (26) peuvent se trouver des butoirs (27).

8. Dispositif de stockage de tôles selon la revendication 1, caractérisé en ce que la branche horizontale (11) du montant (10) est réalisée dans une pièce oblongue de matériau rigide, en ce que la branche verticale (13) du montant (10) comporte deux listels (131, 132) espacés l'un de l'autre, en ce que les extrémités inférieures de ces listels sont raccordées à la branche horizontale (11), en ce que le listel (131 ou 132) est une pièce profilée de section transversale en U, le dos ou le fond de ces pièces profilées étant tourné l'un vers l'autre, en ce qu'entre les listels (131, 132) du montant (10) s'étendent des barreaux (14) destinés à soutenir les premiers supports (15) et en ce que les extrémités des barreaux sont fixées dans les listels.

9. Dispositif de stockage de tôles selon la revendication 8, caractérisé en ce que les barreaux (14) se trouvent au milieu de la largeur de la branche verticale (13) du montant (10) ou en ce que le montant (10) comporte deux rangées de barreaux (14) juxtaposées et s'étendant dans la direction longitudinale de la branche verticale (13), et en ce que la rangée de barreaux respective se trouvent proximité de l'un des bords opposés de la branche verticale (13) du montant (10).

10. Dispositif de stockage de tôles selon la revendication 8, caractérisé en ce que le premier support (15) pouvant être raccordé à la branche verticale (13) du montant (10), comporte une partie terminale (19) pointue et en ce que cette partie terminale (19) est conçue de manière qu'elle puisse s'accrocher derrière l'un des barreaux (14), tandis qu'elle repose sur le barreau (14) situé au-dessous.

11. Dispositif de stockage de tôles selon la revendication 1, dans lequel il existe au moins deux allées entre les rayonnages, caractérisé en ce qu'un chariot de transbordement est associé à l'appareil de commande (3), lequel chariot est réalisé de manière à pouvoir transférer l'appareil de commande d'une allée à une autre allée.

12. Dispositif de stockage de tôles selon la revendication 1, caractérisé en ce que des sas (36) sont réalisés dans les rangées de rayonnage à travers lesquels des wagons de transport pour le produit à stocker peuvent se déplacer transversalement à la direction de déplacement de l'appareil de commande (3).

13. Dispositif de stockage de tôles selon la revendication 7, caractérisé en ce que la branche horizontale (11) du montant (10) est en acier profilé de section transversale carrée et en ce qu'une plaque de pied (12) peut être associée à la face inférieure de cette branche (11).

14. Dispositif de stockage de tôles selon la revendication 3, caractérisé en ce que les longerons (31) sont assemblés entre eux par des traverses (33) qui se trouvent à une certaine distance des extrémités des longerons (31).

15. Dispositif de stockage de tôles selon la revendication 1, caractérisé en ce qu'il est prévu un dispositif à câble (49) qui permet d'alimenter le dispositif de commande (3) en énergie électrique.

EP 0 255 477 B1

FIG.1

9

# FIG. 2

FIG. 3

FIG. 4